# EUROPÄISCHE PATENTSCHRIFT

(11) **EP 3 451 589 B1**
(45) Veröffentlichungstag und Bekanntmachung des Hinweises auf die Patenterteilung: **11.11.2020**
(21) Anmeldenummer: 18187223.5
(22) Anmeldetag: 03.08.2018
(51) Int. Cl.: H04L 12/28, A47L 9/00, H04W 84/12, H04W 12/00, H04W 12/06, H04L 29/06, A47L 9/28

(54) **VERFAHREN ZUM VERBINDEN EINES HAUSHALTSGERÄTES MIT EINEM DRAHTLOSEN HEIMNETZWERK**
METHOD FOR CONNECTING A DOMESTIC APPLIANCE WITH A WIRELESS HOME NETWORK
PROCÉDÉ DE CONNEXION D'UN APPAREIL ÉLECTROMÉNAGER À UN RÉSEAU DOMESTIQUE SANS FIL

(30) Priorität: 25.08.2017 DE 102017119589
(43) Veröffentlichungstag der Anmeldung: 06.03.2019
(73) Patentinhaber: Vorwerk & Co. Interholding GmbH, 42275 Wuppertal (DE)
(72) Erfinder: Windorfer, Harald, 40822 Mettmann (DE); Hillen, Lorenz, 42287 Wuppertal (DE)
(74) Vertreter: Müller, Enno

(56) Entgegenhaltungen:
- DE-A1-102013 219 054
- FR-A1- 2 938 393
- US-A1- 2013 173 811

## Beschreibung

### Gebiet der Technik

Die Erfindung betrifft ein Verfahren zum Verbinden eines Haushaltsgerätes mit einem drahtlosen Heimnetzwerk, wobei sich ein Nutzerendgerät mit einem temporären Kommunikationsnetzwerk des Haushaltsgerätes verbindet und Netzwerkzugangsinformationen für das Heimnetzwerk an das Haushaltsgerät übermittelt, wobei das temporäre Kommunikationsnetzwerk anschließend beendet wird und sich das Haushaltsgerät unter Nutzung der empfangenen Netzwerkzugangsinformationen an dem drahtlosen Heimnetzwerk anmeldet, wobei das Nutzerendgerät von dem Haushaltsgerät eine Information darüber erlangt, dass die Anmeldung des Haushaltsgerätes an dem Heimnetzwerk fehlgeschlagen ist.

Des Weiteren betrifft die Erfindung ein System aus einem Haushaltsgerät und einem Nutzerendgerät, wobei das Haushaltsgerät eine Kommunikationseinrichtung zum Bereitstellen eines temporären Kommunikationsnetzwerkes und zum Empfangen von Netzwerkzugangsinformationen für ein Heimnetzwerk über das temporäre Kommunikationsnetzwerk aufweist, wobei die Kommunikationseinrichtung des Weiteren ausgebildet ist, das Haushaltsgerät nach Beenden des temporären Kommunikationsnetzwerkes unter Nutzung der Netzwerkzugangsinformationen an dem drahtlosen Heimnetzwerk anzumelden.

### Stand der Technik

Verfahren der vorgenannten Art sind im Stand der Technik bekannt. Diese dienen insbesondere zum Verbinden eines Haushaltsgerätes, welches selbst nicht über eine manuelle Eingabeschnittstelle verfügt, mit einem Heimnetzwerk. Bei dem Haushaltsgerät kann es sich beispielsweise um ein sich selbsttätig fortbewegendes Haushaltsgerät wie einen Reinigungsroboter handeln. Um das Haushaltsgerät mit dem Heimnetzwerk zu verbinden, übermittelt ein Nutzerendgerät die für die Anmeldung erforderlichen Netzwerkzugangsinformationen an das Haushaltsgerät.

Die Patentschrift EP 2 728 938 A2 offenbart beispielsweise ein Verfahren zum Verbinden eines Gerätes mit einem Heimnetzwerk, welches Gerät keine eigene Schnittstelle, beispielsweise Tastatur, für die manuelle Eingabe von Netzwerkzugangsinformationen zur Verfügung stellt. Um die Netzwerkzugangsinformationen von einem anderen Gerät zu erlangen, verwirklicht das zu verbindende Gerät eine zeitweilige Funktion als eine Vermittlungsvorrichtung. Dadurch kann es eine Terminalidentifikation für das Heimnetzwerk über das zeitweilige Netzwerk empfangen. Das zu verbindende Gerät speichert die Terminalidentifikation und verbindet sich mittels der Terminalidentifikation mit dem Heimnetzwerk, während seine Funktion als alternative Vermittlungsvorrichtung in dem zeitweiligen drahtlosen Netzwerk beendet wird.

Das Dokument US2013173811 beschreibt ein Verfahren zum Anbinden bzw. zum Registrieren eines Haushaltsgeräts an ein drahtloses Heimnetzwerk, insbesondere ein WLAN-Netzwerk. Ein Smartphone wird mit einem temporären Kommunikationsnetzwerk des Haushaltsgerätes verbunden und übermittelt die Netzwerkzugangsinformationen für das Heimnetzwerk an das Haushaltsgerät. Das Haushaltsgerät meldet sich unter Nutzung der empfangenen Netzwerkzugangsinformationen an dem drahtlosen Heimnetzwerk an, wobei das Smartphone von dem Haushaltsgerät eine Information darüber erlangt, dass die Anmeldung des Haushaltsgerätes an dem Heimnetzwerk fehlgeschlagen ist.

Während der Anmeldung des Gerätes an dem Heimnetzwerk können Fehler auftreten. Beispielsweise kann ein Zugangspasswort zu dem Heimnetzwerk falsch sein oder ein Server des Heimnetzwerkes temporär nicht zur Verfügung stehen. Wenn das Gerät über kein eigenes Display verfügt, kann im Falle einer fehlgeschlagenen Anmeldung nur eine eingeschränkte Fehlermeldung ausgegeben werden, beispielsweise mittels einer blinkenden LED.

### Zusammenfassung der Erfindung

Ausgehend von dem vorgenannten Stand der Technik ist es daher Aufgabe der Erfindung, ein verbessertes Verfahren zum Verbinden eines Haushaltsgerätes mit einem Heimnetzwerk zu schaffen.

Zur Lösung der vorgenannten Aufgabe wird vorgeschlagen, dass das Haushaltsgerät bei Fehlschlagen der Anmeldung erneut ein temporäres Kommunikationsnetzwerk eröffnet, wobei das Nutzerendgerät das erneute Eröffnen des temporären Kommunikationsnetzwerkes erkennt und als Information über das Fehlschlagen der Anmeldung des Haushaltsgerätes an dem Heimnetzwerk wertet.

Erfindungsgemäß erhält das Nutzerendgerät nun eine Information darüber, dass sich das Haushaltsgerät nicht an dem Heimnetzwerk anmelden konnte. Besonders vorteilhaft handelt es sich bei dem Nutzerendgerät um ein mobiles Endgerät des Nutzers, wie beispielsweise ein Mobiltelefon, ein Tablet-Computer oder ein Laptop. Diese Nutzerendgeräte weisen üblicherweise umfangreiche Einrichtungen zur Eingabe und Darstellung von Informationen auf. Beispielsweise verfügt das Nutzerendgerät über ein Display, auf welchem einem Nutzer das Fehlschlagen der Anmeldung angezeigt werden kann. Dabei ist es möglich, umfangreichere Informationen über den Fehler anzuzeigen, die über eine bloße Ja/Nein-Information hinausgehen. Das Haushaltsgerät eröffnet bei Fehlschlagen der Anmeldung erneut ein temporäres Kommunikationsnetzwerk, wobei das Nutzerendgerät das erneute Eröffnen des temporären Kommunikationsnetzwerkes erkennt und als Information über das Fehlschlagen der Anmeldung des Haushaltsgerätes an dem Heimnetzwerk wertet. Gemäß dieser Ausgestaltung übermittelt das Haushaltsgerät nicht aktiv einen Fehlerbericht oder ähnliches an das Nutzerendgerät, vielmehr eröffnet das Haushaltsgerät erneut ein temporäres Kommunikationsnetzwerk, damit sich das Nutzerendgerät noch einmal zur Übermittlung der Netzwerkzugangsinformationen mit dem Haushaltsgerät verbinden kann. Das Nutzerendgerät interpretiert das erneute Eröffnen des temporären Kommunikationsnetzwerkes so, dass die Einbindung des Haushaltsgerätes in das Heimnetzwerk fehlgeschlagen ist. Es findet zu diesem Zeitpunkt jedoch nicht zwangsläufig eine erneute Verbindung des Nutzerendgerätes mit dem temporären Kommunikationsnetzwerk statt, um beispielsweise fehlerbezogene Daten zu übertragen. Alleinig das erneute Eröffnen eines temporären Kommunikationsnetzwerkes des Haushaltsgerätes reicht als Information über das Fehlschlagen der Anmeldung aus. Diese Information kann das Nutzerendgerät dann nutzen, um das Fehlschlagen des Verbindungsaufbaus an einen Nutzer zu melden.

Es wird vorgeschlagen, dass das Haushaltsgerät eine Zeitspanne festlegt, innerhalb welcher das Anmelden an dem drahtlosen Heimnetzwerk zu erfolgen hat, wobei die Anmeldung nach Ablauf der Zeitspanne ohne erfolgreiches Verbinden des Haushaltsgerätes als fehlgeschlagen gilt. Nach dem Abschalten des temporären Kommunikationsnetzwerkes oder insbesondere nach Übermittlung der Netzwerkzugangsinformationen an das Heimnetzwerk kann in dem Haushaltsgerät ein Timer gestartet werden, welcher die Zeitspanne definiert. Innerhalb dieser Zeitspanne muss die Verbindung zwischen dem Haushaltsgerät und dem Heimnetzwerk zustande kommen, damit die Anmeldung nicht als fehlgeschlagen gilt. Falls die Anmeldung beim Ablauf der Zeitspanne nicht stattgefunden hat, wird erneut ein temporäres Kommunikationsnetzwerk eingeschaltet. Eine Steuereinrichtung des Haushaltsgerätes überwacht dazu eine Kommunikationseinrichtung in Bezug auf einen Datenaustausch zwischen der Kommunikationseinrichtung des Haushaltsgerätes und dem drahtlosen Heimnetzwerk, wobei beispielsweise anhand eines definierten Antwortdatensatzes eines Netzwerkservers des Heimnetzwerkes darauf geschlossen werden kann, dass das Haushaltsgerät ordnungsgemäß an dem Heimnetzwerk angemeldet werden konnte. Die durch den Timer festgelegte Zeitspanne kann wenige Minuten betragen, vorteilhaft jedoch weniger als 2 Minuten oder besonders bevorzugt weniger als 1 Minute. Sofern das Haushaltsgerät in dieser Zeitspanne keine Antwort von dem Server des Heimnetzwerkes erhält, wertet die Steuereinrichtung des Haushaltsgerätes das Anmelden als erfolglos, d. h. fehlgeschlagen. Daraufhin eröffnet das Haushaltsgerät wie zuvor erläutert erneut ein temporäres Kommunikationsnetzwerk, welches von dem Nutzerendgerät erkannt werden kann.

Des Weiteren wird vorgeschlagen, dass das Nutzerendgerät eine Zeitspanne festlegt, innerhalb welcher das Nutzerendgerät überwacht, ob das Haushaltsgerät erneut ein temporäres Kommunikationsnetzwerk eröffnet. Gemäß dieser Ausgestaltung überwacht das Nutzerendgerät seinerseits für eine festgelegte Zeitspanne, ob das Haushaltsgerät erneut ein temporäres Kommunikationsnetzwerk aktiviert. Falls das Nutzerendgerät innerhalb der Zeitspanne ein temporäres Kommunikationsnetzwerk des Haushaltsgerätes ermittelt, interpretiert das Nutzerendgerät diese Information so, dass die Einbindung des Haushaltsgerätes in das Heimnetzwerk fehlgeschlagen ist. Die von dem Nutzerendgerät festgelegte Zeitspanne ist vorteilhaft größer als die von dem Haushaltsgerät angewendete Zeitspanne zur Überwachung der ordnungsgemäßen Anmeldung, da nach dem Fehlschlagen der Anmeldung erst noch das temporäre Kommunikationsnetzwerk durch das Haushaltsgerät eröffnet werden muss. Vorzugsweise legt das Nutzerendgerät eine Zeitspanne von wenigen Minuten, vorteilhaft von beispielsweise bis zu 2 Minuten fest.

In diesem Zusammenhang wird des Weiteren vorgeschlagen, dass die Zeitspanne, welche von dem Nutzerendgerät festgelegt wird, nach dem Übermitteln der Netzwerkzugangsinformationen an das Haushaltsgerät und/oder nach dem Beenden des temporären Kommunikationsnetzwerkes beginnt. Als Startzeitpunkt für den Timer des Nutzerendgerätes kann somit beispielsweise entweder der Zeitpunkt gewählt werden, zu welchem das Nutzerendgerät die Netzwerkzugangsinformationen an das Haushaltsgerät übermittelt hat, oder zu welchem das Haushaltsgerät das temporäre Kommunikationsnetzwerk beendet. Beide Zeitpunkte können über die von der Kommunikationseinrichtung des Nutzerendgerätes ausgegebene Datenkommunikation zwischen dem Nutzerendgerät und dem Haushaltsgerät ermittelt werden.

Des Weiteren kann vorgesehen sein, dass das Nutzerendgerät in dem Fall, dass die Anmeldung des Haushaltsgerätes fehlgeschlagen ist, eine Nachricht an einen Nutzer übermittelt. Sofern es sich bei dem Nutzerendgerät um ein mobiles Gerät des Nutzers handelt, kann der Nutzer die Nachricht auch dann erhalten, wenn er sich nicht in der Nähe des Haushaltsgerätes befindet. Die Nachricht über das Fehlschlagen kann eine akustische, optische und/oder haptische Mitteilung sein, beispielsweise in der Form einer Textanzeige, der Ausgabe einer akustischen Mitteilung als Sprache oder Klangfolge oder auch eine Vibration des Nutzerendgerätes. Die Nachricht kann sich auf die Information über das Fehlschlagen des Verbindungsaufbaus beschränken. Alternativ ist es jedoch auch möglich, dass weitere Informationen, wie beispielsweise der Zeitpunkt der Übermittlung der Netzwerkzugangsinformationen an das Haushaltsgerät oder der Zeitpunkt des Beendens des temporären Kommunikationsnetzwerkes, angezeigt werden.

Gemäß einer weitergehenden Ausführungsform des Verfahrens kann vorgesehen sein, dass sich das Nutzerendgerät mit dem erneuten temporären Kommunikationsnetzwerk des Haushaltsgerätes verbindet und einen Fehlerbericht über das Fehlschlagen der Anmeldung empfängt. Gemäß dieser Ausgestaltung verbindet sich das Nutzerendgerät erneut mit dem temporären Kommunikationsnetzwerk des Haushaltsgerätes, um fehlerbezogene Daten zu empfangen. Der Fehlerbericht kann beispielsweise eine Information über den Grund des Fehlschlagens der Anmeldung enthalten, beispielsweise dass das Zugangspasswort zu dem Heimnetzwerk falsch war oder das der Server des Heimnetzwerkes temporär nicht erreichbar war. Gemäß dieser Ausgestaltung werden detaillierte Fehlerinformationen aus dem Haushaltsgerät ausgelesen, die dann einem Nutzer zur Verfügung gestellt werden können.

Insbesondere wird vorgeschlagen, dass das Nutzerendgerät den Fehlerbericht empfängt und eine darin enthaltene Fehlerinformation auf einem Display in Symbolform und/oder in Textform darstellt. Der Fehlerbericht mit den darin enthaltenen Fehlerinformationen sowie gegebenenfalls zusätzlicher Hinweise wird somit optisch bzw. visuell angezeigt. Wenn beispielsweise das Zugangspasswort zu dem Heimnetzwerk falsch war, kann einem Nutzer neben der bloßen Fehlerinformation zusätzlich der Hinweis übermittelt werden, dass die Eingabe zu wiederholen ist. Für den Fall, dass beispielsweise der Server des Heimnetzwerkes temporär nicht erreichbar war, könnte der Nutzer den Hinweis bekommen, einige Minuten zu warten und dann die Konfiguration erneut vorzunehmen. Der Fehlerbericht und/oder einzelne Fehlerinformationen daraus und/oder zusätzliche Hinweise können auf dem Display des Nutzerendgerätes in unterschiedlicher Art und Weise dargestellt werden. Beispielsweise können die Informationen als Klartext, d. h. in Textform, dargestellt werden oder mit Symbolen, die beispielsweise unterschiedliche Fehlerquellen andeuten, insbesondere einen nicht erreichbaren Server oder ein fehlerhaftes Zugangspasswort. Selbstverständlich können die Informationen auch gleichzeitig auf verschiedene Arten und Weisen dargestellt werden, beispielsweise sowohl in Symbolform als auch in Textform.

Neben dem zuvor beschriebenen Verfahren zum Verbinden eines Haushaltsgerätes mit einem drahtlosen Heimnetzwerk wird mit der Erfindung des Weiteren auch ein System aus einem Haushaltsgerät und einem Nutzerendgerät vorgeschlagen, insbesondere einem sich selbsttätig fortbewegenden Haushaltsgerät, wobei das Haushaltsgerät eine Kommunikationseinrichtung zum Bereitstellen eines temporären Kommunikationsnetzwerkes und zum Empfangen von Netzwerkzugangsinformationen für ein Heimnetzwerk über das temporäre Kommunikationsnetzwerk aufweist, wobei die Kommunikationseinrichtung des Weiteren ausgebildet ist, das Haushaltsgerät nach Beenden des temporären Kommunikationsnetzwerkes unter Nutzung der Netzwerkzugangsinformationen an dem drahtlosen Heimnetzwerk anzumelden, wobei das Haushaltsgerät des Weiteren eine Steuereinrichtung aufweist, die eingerichtet ist, ein Anmelden an dem Heimnetzwerk zu überwachen und die Kommunikationseinrichtung bei Erkennen eines Fehlschlagens der Anmeldung zum erneuten Eröffnen eines temporären Kommunikationsnetzwerkes zu steuern, und wobei das Nutzerendgerät eingerichtet ist, das erneute Eröffnen des temporären Kommunikationsnetzwerkes zu erkennen und als Information über das Fehlschlagen der Anmeldung des Haushaltsgerätes an dem Heimnetzwerk zu werten.

Insbesondere kann vorgesehen sein, dass das Haushaltsgerät einen Timer aufweist, welcher eine Zeitspanne festlegt, innerhalb der das Anmelden an dem drahtlosen Heimnetzwerk zu erfolgen hat, wobei die Anmeldung nach Ablauf der festgelegten Zeitspanne ohne erfolgreiches Verbinden des Haushaltsgerätes als fehlgeschlagen gilt. Die Steuereinrichtung des Haushaltsgerätes kann des Weiteren eingerichtet sein, den Timer zu starten, wenn das temporäre Kommunikationsnetzwerk beendet wurde oder die Netzwerkzugangsinformationen an das Heimnetzwerk übermittelt wurden.

### Kurze Beschreibung der Zeichnungen

Im Folgenden wird die Erfindung anhand von Ausführungsbeispielen näher erläutert. Es zeigen
- Fig. 1: ein System aus einem Haushaltsgerät, einem Nutzerendgerät und einem Heimnetzwerk während der Übermittlung von Netzwerkzugangsinformationen von dem Nutzerendgerät an das Haushaltsgerät,
- Fig. 2: das System gemäß Fig. 1 während der Anmeldung des Haushaltsgerätes an dem Heimnetzwerk.

### Beschreibung der Ausführungsformen

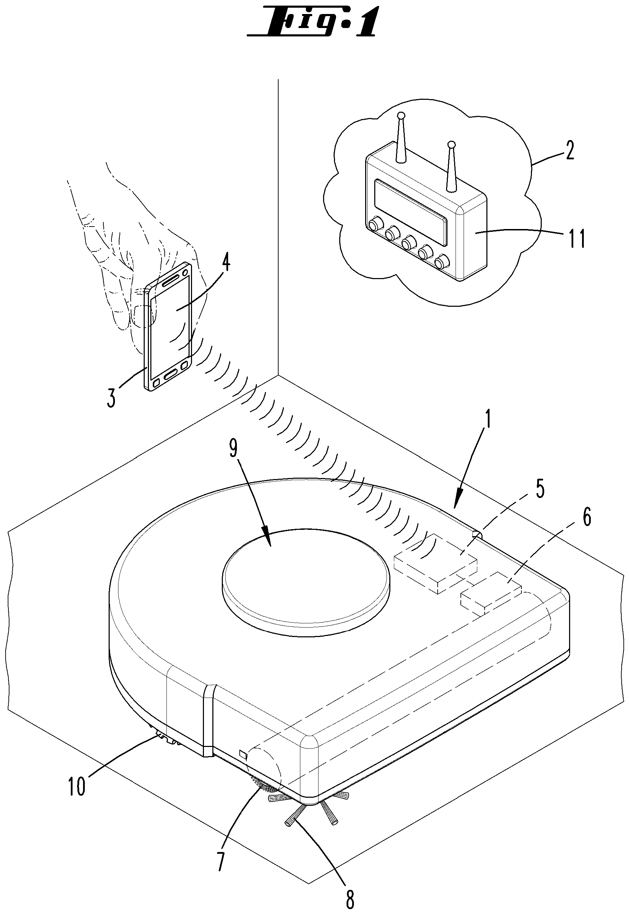

Figur 1 zeigt ein Heimnetzwerk 2, beispielsweise ein übliches WiFi-Netzwerk mit einem Access Point 11. Des Weiteren sind ein Haushaltsgerät 1 und ein Nutzerendgerät 3 gezeigt, welche mit dem Heimnetzwerk 2 verbunden werden können. Das Haushaltsgerät 1 ist hier ein sich selbsttätig fortbewegendes Reinigungsgerät, nämlich ein Saugroboter. Das Nutzerendgerät 3 ist ein Smartphone. Das Haushaltsgerät 1, das Nutzerendgerät 3 und der Access Point 11 weisen Kommunikationseinrichtungen 5, nämlich hier WiFi-Funkmodule, auf.

Das Haushaltsgerät 1 weist eine nicht weiter dargestellte Navigations- und Selbstlokalisierungseinrichtung auf, mittels welcher sich das Haushaltsgerät 1 innerhalb einer Umgebung orientieren und fortbewegen kann. Die Navigations- und Selbstlokalisierungseinrichtung wertet Messdaten einer Abstandsmesseinrichtung 9 aus, welche hier beispielsweise ein Rundum-Laserscanner nach der Art eines Lasertriangulationsmesssystems ist. Mittels der Abstandsmesseinrichtung 9 werden Abstände zu Hindernissen und Raumbegrenzungen innerhalb der Umgebung gemessen. Die Messdaten werden vorzugsweise mit Messdaten eines Odometriesensors verglichen, welcher Rädern 10 des Haushaltsgerätes 1 zugeordnet ist und eine von dem Haushaltsgerät 1 zurückgelegte Strecke erfasst. Die Informationen über Hindernisse und Raumbegrenzungen der Umgebung werden zu einer Umgebungskarte des Haushaltsgerätes 1 weiterverarbeitet, mit deren Hilfe sich das Haushaltsgerät 1 in der Umgebung orientieren kann.

Das Haushaltsgerät 1 weist des Weiteren Reinigungselemente 7, 8 zur Bearbeitung einer zu reinigenden Fläche auf. Das Reinigungselement 7 ist hier beispielsweise eine elektromotorisch angetriebene Borstenwalze, welche um eine im Wesentlichen horizontale Achse rotiert. Das Reinigungselement 8 ist eine um eine im Wesentlichen vertikale Achse rotierende Seitenbürste, die über eine Kontur des Haushaltsgerätes 1 hinausragt und insbesondere zur Reinigung an Boden-Wand-Übergängen geeignet ist. Das Haushaltsgerät 1 beinhaltet des Weiteren die Kommunikationseinrichtung 5 sowie eine Steuereinrichtung 6, die unter anderem auch die Kommunikationseinrichtung 5 steuert und Daten von dieser empfängt.

Das Nutzerendgerät 3 ist hier als Smartphone ausgebildet, kann jedoch alternativ auch ein anderes, vorzugsweise mobiles, Endgerät des Nutzers sein, bevorzugt aus der Gruppe Laptop, Tablet-Computer und dergleichen. Das Nutzerendgerät 3 weist ebenfalls eine nicht weiter dargestellte Kommunikationseinrichtung sowie ebenfalls eine Steuereinrichtung auf. Zudem verfügt das Nutzerendgerät 3 über ein Display 4. Das Nutzerendgerät 3 ist üblicherweise mit dem Heimnetzwerk 2 verbunden.

Figur 1 zeigt eine Übermittlung von Netzwerkzugangsinformationen von dem Nutzerendgerät 3 an das Haushaltsgerät 1. Um die Netzwerkzugangsinformationen übertragen zu können, hat die Kommunikationseinrichtung 5 des Haushaltsgerätes 1 einen WiFi-Hotspot als temporäres Kommunikationsnetzwerk geöffnet. Die nicht weiter dargestellte Kommunikationseinrichtung des Nutzerendgerätes 3 scannt die Umgebung nach verfügbaren Netzwerken ab und stellt diese beispielsweise einer auf dem Nutzerendgerät 3 installierten Applikation zur Verfügung. Die verfügbaren Netzwerke können einem Nutzer auf dem Display 4 des Nutzerendgerätes 3 angezeigt werden, woraufhin er ein gewünschtes Netzwerk wählen kann, hier nämlich das temporäre Kommunikationsnetzwerk des Haushaltsgerätes 1. Daraufhin gibt ein Nutzer Netzwerkzugangsinformationen für das drahtlose Heimnetzwerk 2 über das vorzugsweise als Touchscreen ausgebildete Display 4 in das Nutzerendgerät 3 ein. Das Nutzerendgerät 3 übermittelt die Netzwerkzugangsinformationen daraufhin über das temporäre Kommunikationsnetzwerk an das Haushaltsgerät 1. Die auf dem Nutzerendgerät 3 installierte Applikation kann dem Nutzer eine Eingabemaske auf dem Display 4 bereitstellen, in welcher der Nutzer eine SSID des Haushaltsgerätes 1, ein zugehöriges Passwort und einen Namen für das Haushaltsgerät 1 eingeben kann. Die SSID des Haushaltsgerätes 1 kann herstellerseitig beispielsweise auf einem Aufdruck oder Aufkleber auf dem Gehäuse des Haushaltsgerätes 1 bereitgestellt sein. Nach einer Bestätigung der getätigten Eingabe durch den Nutzer und Übermittlung an das Haushaltsgerät 1 wird das temporäre Kommunikationsnetzwerk geschlossen.

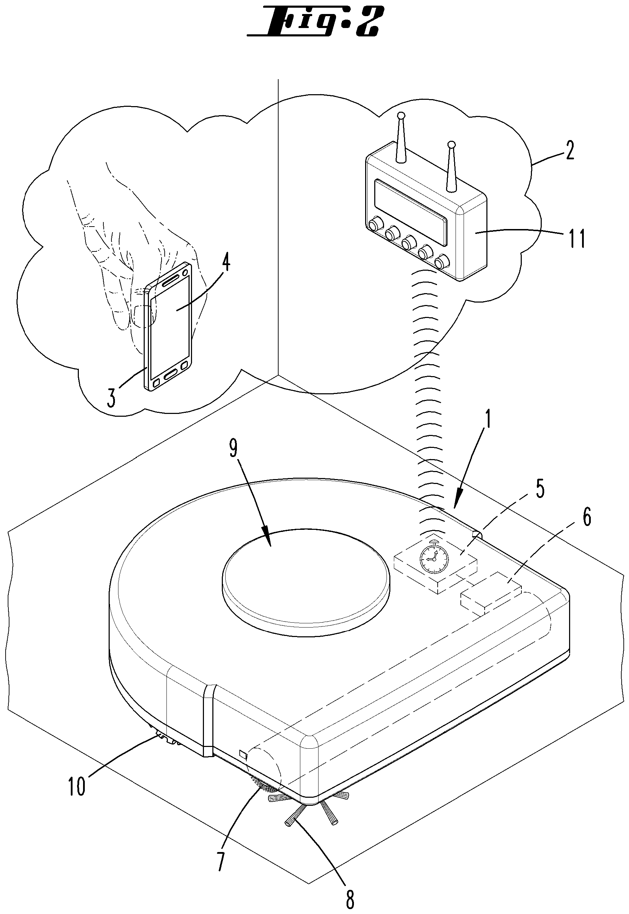

Daraufhin versucht sich das Haushaltsgerät 1, wie in Figur 2 dargestellt, mit dem Heimnetzwerk 2 zu verbinden. Auch das Nutzerendgerät 3 ist nach dem Beenden des temporären Kommunikationsnetzwerkes wieder mit dem Heimnetzwerk 2 verbunden. Die Kommunikationseinrichtung 5 des Haushaltsgerätes 1 übermittelt die Netzwerkzugangsinformationen an den Access Point 11 des Heimnetzwerkes 2. Die Steuereinrichtung 6 des Haushaltsgerätes 1 startet mit der Übermittlung der Netzwerkzugangsinformationen einen Timer, der beispielsweise für eine Zeitspanne von 1 Minute eingestellt ist. Die Steuereinrichtung 6 überwacht daraufhin, ob die Kommunikationseinrichtung 5 eine Antwort von dem Access Point 11 erhält, welche darauf schließen lässt, dass das Anmelden des Haushaltsgerätes 1 an dem Heimnetzwerk 2 erfolgreich stattgefunden hat.

Sofern innerhalb der mit dem Timer festgelegten Zeitspanne keine Antwort des Access Points 11 an der Kommunikationseinrichtung 5 des Haushaltsgerätes 1 empfangen wird, wertet die Steuereinrichtung 6 dies als ein Fehlschlagen der Anmeldung. Daraufhin veranlasst die Steuereinrichtung 6 die Kommunikationseinrichtung 5, erneut ein temporäres Kommunikationsnetzwerk zu eröffnen. Dieses erneute temporäre Kommunikationsnetzwerk des Haushaltsgerätes 1 kann wiederum von der Kommunikationseinrichtung des Nutzerendgerätes 3 detektiert werden. Sofern das Nutzerendgerät 3 ein erneutes Eröffnen eines temporären Kommunikationsnetzwerkes erkennt, wird dies von der auf dem Nutzerendgerät 3 installierten Applikation als Information über ein Fehlschlagen der Anmeldung des Haushaltsgerätes 1 an dem Heimnetzwerk 2 gewertet.

Die auf dem Nutzerendgerät 3 installierte Applikation kann ihrerseits eine Zeitspanne festlegen, innerhalb welcher ein erneutes Eröffnen eines temporären Kommunikationsnetzwerkes durch das Haushaltsgerät 1 überwacht wird. Diese Zeitspanne kann beispielsweise ab dem Zeitpunkt der Übermittlung der Netzwerkzugangsinformationen von dem Nutzerendgerät 3 an das Haushaltsgerät 1 und/oder dem Zeitpunkt des Beendens des temporären Kommunikationsnetzwerkes gestartet werden. Innerhalb der definierten Zeitspanne wertet die Applikation des Nutzerendgerätes 3 das Auftreten eines temporären Kommunikationsnetzwerkes des Haushaltsgerätes 1 als Information darüber, dass sich das Haushaltsgerät 1 nicht an dem Heimnetzwerk 2 anmelden konnte. Diese Information kann daraufhin einem Nutzer auf dem Display 4 des Nutzerendgerätes 3 angezeigt werden.

Um weitere Informationen über das Fehlschlagen der Anmeldung zu erhalten, insbesondere über einen Grund des Fehlschlagens, kann sich das Nutzerendgerät 3 gemäß einer weitergebildeten Ausführungsform (nicht dargestellt) erneut an dem temporären Kommunikationsnetzwerk des Haushaltsgerätes 1 anmelden und einen Fehlerbericht des Haushaltsgerätes auslesen bzw. anfordern. Das Nutzerendgerät 3 kann die in dem Fehlerbericht enthaltenen Informationen auswerten und zumindest teilweise auf dem Display 4 anzeigen. Den Fehlerinformationen kann dabei ein Zusatz beigefügt sein, welcher den Nutzer über vorzugsweise weitere Maßnahmen informiert, beispielsweise eine Aufforderung, die Eingabe der Netzwerkzugangsinformationen an dem Nutzerendgerät 3 zu wiederholen, oder einige Minuten zu warten, bis der Access Point 11 des Heimnetzwerkes 2 wieder für eine Anmeldung des Haushaltsgerätes 1 bereit ist.

### Liste der Bezugszeichen

- 1: Haushaltsgerät
- 2: Heimnetzwerk
- 3: Nutzerendgerät
- 4: Display
- 5: Kommunikationseinrichtung
- 6: Steuereinrichtung
- 7: Reinigungselement
- 8: Reinigungselement
- 9: Abstandsmesseinrichtung
- 10: Rad
- 11: Access Point

## Patentansprüche

1. Verfahren zum Verbinden eines Haushaltsgerätes (1) mit einem drahtlosen Heimnetzwerk (2), wobei sich ein Nutzerendgerät (3) mit einem temporären Kommunikationsnetzwerk des Haushaltsgerätes (1) verbindet und Netzwerkzugangsinformationen für das Heimnetzwerk (2) an das Haushaltsgerät (1) übermittelt, wobei das temporäre Kommunikationsnetzwerk anschließend beendet wird und sich das Haushaltsgerät (1) unter Nutzung der empfangenen Netzwerkzugangsinformationen an dem drahtlosen Heimnetzwerk (2) anmeldet, wobei das Nutzerendgerät (3) von dem Haushaltsgerät (1) eine Information darüber erlangt, dass die Anmeldung des Haushaltsgerätes (1) an dem Heimnetzwerk (2) fehlgeschlagen ist, **dadurch gekennzeichnet, dass** das Haushaltsgerät (1) bei Fehlschlagen der Anmeldung erneut ein temporäres Kommunikationsnetzwerk eröffnet, wobei das Nutzerendgerät (3) das erneute Eröffnen des temporären Kommunikationsnetzwerkes erkennt und als Information über das Fehlschlagen der Anmeldung des Haushaltsgerätes (1) an dem Heimnetzwerk (2) wertet.

2. Verfahren nach Anspruch 1, **dadurch gekennzeichnet, dass** das Haushaltsgerät (1) eine Zeitspanne festlegt, innerhalb welcher das Anmelden an dem drahtlosen Heimnetzwerk (2) zu erfolgen hat, wobei die Anmeldung nach Ablauf der Zeitspanne ohne erfolgreiches Verbinden des Haushaltsgerätes (1) als fehlgeschlagen gilt.

3. Verfahren nach Anspruch 2, **dadurch gekennzeichnet, dass** die Zeitspanne nach dem Beenden des temporären Kommunikationsnetzwerkes, insbesondere nach Übermittlung der Netzwerkzugangsinformationen an das Heimnetzwerk (2), beginnt.

4. Verfahren nach einem der vorhergehenden Ansprüche, **dadurch gekennzeichnet, dass** das Nutzerendgerät (3) eine Zeitspanne festlegt, innerhalb welcher das Nutzerendgerät (3) überwacht, ob das Haushaltsgerät (1) erneut ein temporäres Kommunikationsnetzwerk eröffnet.

5. Verfahren nach Anspruch 4, **dadurch gekennzeichnet, dass** die Zeitspanne nach dem Übermitteln der Netzwerkzugangsinformationen an das Haushaltsgerät (1) und/oder nach dem Beenden des temporären Kommunikationsnetzwerkes beginnt.

6. Verfahren nach einem der vorhergehenden Ansprüche, **dadurch gekennzeichnet, dass** das Nutzerendgerät (3) in dem Fall, dass die Anmeldung des Haushaltsgerätes (1) fehlgeschlagen ist, eine Nachricht an einen Nutzer übermittelt.

7. Verfahren nach einem der vorhergehenden Ansprüche, **dadurch gekennzeichnet, dass** sich das Nutzerendgerät (3) mit dem erneuten temporären Kommunikationsnetzwerk des Haushaltsgerätes (1) verbindet und einen Fehlerbericht über das Fehlschlagen der Anmeldung empfängt.

8. Verfahren nach Anspruch 7, **dadurch gekennzeichnet, dass** das Nutzerendgerät (3) den Fehlerbericht empfängt und eine darin enthaltene Fehlerinformation auf einem Display (4) in Symbolform und/oder in Textform darstellt.

9. System aus einem Haushaltsgerät (1), insbesondere einem sich selbsttätig fortbewegenden Haushaltsgerät (1), und einem Nutzerendgerät (3), wobei das Haushaltsgerät (1) eine Kommunikationseinrichtung (5) zum Bereitstellen eines temporären Kommunikationsnetzwerkes und zum Empfangen von Netzwerkzugangsinformationen für ein Heimnetzwerk (2) über das temporäre Kommunikationsnetzwerk aufweist, wobei die Kommunikationseinrichtung (5) des Weiteren ausgebildet ist, das Haushaltsgerät (1) nach Beenden des temporären Kommunikationsnetzwerkes unter Nutzung der Netzwerkzugangsinformationen an dem drahtlosen Heimnetzwerk (2) anzumelden, **dadurch gekennzeichnet, dass** das Haushaltsgerät (1) eine Steuereinrichtung (6) aufweist, welche eingerichtet ist, ein Anmelden an dem Heimnetzwerk (2) zu überwachen und die Kommunikationseinrichtung (5) bei Erkennen eines Fehlschlagens der Anmeldung zum erneuten Eröffnen eines temporären Kommunikationsnetzwerkes zu steuern, und wobei das Nutzerendgerät (3) eingerichtet ist, das erneute Eröffnen des temporären Kommunikationsnetzwerkes zu erkennen und als Information über das Fehlschlagen der Anmeldung des Haushaltgerätes (1) an dem Heimnetzwerk (2) zu werten.

## Claims

1. A method for connecting a household appliance (1) to a wireless home network (2), wherein a user terminal (3) connects to a temporary communication network of the household appliance (1) and transmits network access information for the home network (2) to the household appliance (1), wherein the temporary communication network is ended subsequently and the household appliance (1) logs into the wireless home network (2) by using the received network access information, wherein the user terminal (3) obtains information from the household appliance (1) about the fact that the log-in of the household appliance (1) into the home network (2) has failed, **characterized in that** the household appliance (1) opens a temporary communication network again if the log-in fails, wherein the user terminal (3) recognizes the renewed opening of the temporary communication network and classifies it as information about the failure of the household appliance (1) to log into the home network (2).

2. The method according to claim 1, **characterized in that** the household appliance (1) determines a period of time, within which the log-in into the wireless home network (2) needs to take place, wherein the log-in is considered as having failed after the period of time has elapsed without successful connection of the household appliance (1).

3. The method according to claim 2, **characterized in that** the period of time starts after the temporary communication network has ended, in particular after transmission of the network access information to the household appliance (2).

4. The method according to one of the preceding claims, **characterized in that** the user terminal (3) determines a period of time, within which the user terminal (3) monitors, whether the household appliance (1) opens a temporary communication network again.

5. The method according to claim 4, **characterized in that** the period of time starts after the transmission of the network access information to the household appliance (1) and/or after the temporary communication network has ended.

6. The method according to one of the preceding claims, **characterized in that** the user terminal (3) transmits a message to a user in the event that the log-in of the household appliance (1) has failed.

7. The method according to one of the preceding claims, **characterized in that** the user terminal (3) connects to the renewed temporary communication network of the household appliance (1) and receives an error report about the failure of the log-in.

8. The method according to claim 7, **characterized in that** the user terminal (3) receives the error report and displays an error information contained therein on a display (4) in symbol form and/or in text form.

9. A system comprising of a household appliance (1), in particular an automatically moving household appliance (1) and a user terminal (3), wherein the household appliance (1) has a communication device (5) for providing a temporary communication network and for receiving network access information for a home network (2) about the temporary communication network, wherein the communication device (5) is furthermore embodied to log the household appliance (1) into the wireless home network (2) after ending the temporary communication network by using the network access information, **characterized in that** household appliance (1) has a control device (6), which is set up to monitor a log-in into the home network (2) and to control the communication device (5) to open a temporary communication network again, if a failure of the log-in is detected and wherein the user terminal (3) is embodied to recognize the renewed opening of the temporary communication network and classifies it as information about the failure of the household appliance (1) to log into the home network.

## Revendications

1. Procédé pour connecter un appareil ménager (1) à un réseau domestique sans fil (2), dans lequel un terminal d'utilisateur (3) se connecte à un réseau de communication temporaire de l'appareil ménager (1) et transmet à l'appareil ménager (1) des informations d'accès au réseau pour le réseau domestique (2), dans lequel il est ensuite mis fin au réseau de communication temporaire et l'appareil ménager (1) se connecte au réseau domestique sans fil (2) en utilisant les informations d'accès au réseau reçues, dans lequel le terminal d'utilisateur (3) reçoit de l'appareil ménager (1) une information selon laquelle la connexion de l'appareil ménager (1) au réseau domestique (2) a échoué, **caractérisé en ce que**, en cas d'échec de la connexion, l'appareil ménager (1) ouvre à nouveau un réseau de communication temporaire, dans lequel le terminal d'utilisateur (3) reconnait la réouverture du réseau de communication temporaire et l'évalue en tant qu'information de l'échec de la connexion de l'appareil ménager (1) au réseau domestique (2).

2. Procédé selon la revendication 1, **caractérisé en ce que** l'appareil ménager (1) définit une période de temps pendant laquelle la connexion au réseau domestique sans fil (2) doit avoir lieu, la connexion étant considérée comme ayant échoué après l'expiration de la période de temps sans connexion réussie de l'appareil ménager (1).

3. Procédé selon la revendication 2, **caractérisé en ce que** la période de temps commence après qu'il est mis fin au réseau de communication temporaire, en particulier après que les informations d'accès au réseau ont été transmises au réseau domestique (2).

4. Procédé selon l'une des revendications précédentes, **caractérisé en ce que** le terminal d'utilisateur (3) définit une période de temps pendant laquelle le terminal d'utilisateur (3) surveille si l'appareil ménager (1) ouvre à nouveau un réseau de communication temporaire.

5. Procédé selon la revendication 4, **caractérisé en ce que** la période de temps commence après que les informations d'accès au réseau ont été transmises à l'appareil ménager (1) et/ou après qu'il a été mis fin au réseau de communication temporaire.

6. Procédé selon l'une des revendications précédentes, **caractérisé en ce que** le terminal d'utilisateur (3) transmet un message à un utilisateur dans le cas où la connexion de l'appareil ménager (1) a échoué.

7. Procédé selon l'une des revendications précédentes, **caractérisé en ce que** le terminal d'utilisateur (3) se connecte au réseau de communication temporaire renouvelé de l'appareil ménager (1) et reçoit un rapport d'erreur concernant l'échec de la connexion.

8. Procédé selon la revendication 7, **caractérisé en ce que** le terminal d'utilisateur (3) reçoit le rapport d'erreur et présente sous forme de symbole et/ou sous forme de texte sur un écran (4) une information d'erreur contenue dans celui-ci.

9. Système comprenant un appareil ménager (1), en particulier un appareil ménager (1) à déplacement automatique, et un terminal d'utilisateur (3), dans lequel l'appareil ménager (1) comporte un dispositif de communication (5) pour établir un réseau de communication temporaire et pour recevoir des informations d'accès au réseau pour un réseau domestique (2) via le réseau de communication temporaire, dans lequel le moyen de communication (5) est en outre adapté pour connecter l'appareil ménager (1) au réseau domestique sans fil (2) en utilisant les informations d'accès au réseau après qu'il est mis fin au réseau de communication temporaire, **caractérisé en ce que** l'appareil ménager (1) comprend un dispositif de commande (6) qui est configuré pour surveiller une connexion au réseau domestique (2) et pour commander le dispositif de communication (5) pour ouvrir à nouveau un réseau de communication temporaire lorsque est reconnu un échec de la connexion, et dans lequel le terminal d'utilisateur (3) est agencé pour reconnaître la réouverture du réseau de communication temporaire et pour l'évaluer en tant qu'information de l'échec de la connexion de l'appareil ménager (1) au réseau domestique (2).
